# EUROPEAN PATENT APPLICATION

(11) **EP 4 047 926 A1**
(43) Date of publication of application: **24.08.2022**
(21) Application number: 20877543.7
(22) Date of filing: 11.08.2020
(51) Int. Cl.: H04N 5/66, G06T 5/00

(54) **IMAGE PROCESSING METHOD, IMAGE PROCESSING SYSTEM, AND IMAGE PROCESSING DEVICE**

(30) Priority: 16.10.2019 JP 2019189473
(71) Applicant: Panasonic Intellectual Property Management Co., Ltd., Osaka-shi, Osaka 540-6207 (JP)
(72) Inventor: KAMIIZUMI, Haruka, Chuo-ku, Osaka-shi, Osaka 540-6207 (JP)
(74) Representative: Novagraaf International SA
(86) International application number: PCT/JP2020/030632
(87) International publication number: WO 2021/075134

(57) **Abstract**

An image processing method includes: obtaining an input image (S1); setting a first region and a second region in a region of the input image (S2); calculating an overall representative brightness value of pixels in the input image, and a first representative brightness value of first pixels in the first region (S3); setting, according to these values, a first parameter of first gamma correction, which increases the brightness as compared with reference gamma correction based on a reference parameter, to increase a brightness by a greater degree as the first representative brightness value is smaller and increase the brightness by a greater degree as the overall representative brightness value is greater (S4); and performing gamma correction on the input image by performing the first gamma correction based on the first parameter on the first region, and outputting an output image obtained through the gamma correction (S5).

## Description

### [Technical Field]

The present disclosure relates to an image processing method, an image processing system, and an image processing device.

### [Background Art]

Patent Literature (PTL) 1 discloses an image processing device that performs image processing to highlight an image of a region including a main part so that this image is more prominent than an image of a different region.

### [Citation List]

### [Patent Literature]

[PTL 1] Japanese Unexamined Patent Application Publication No. 2012-83848

### [Summary of Invention]

### [Technical Problem]

Unfortunately, the image processing device disclosed in PTL 1 may generate an image that is unnatural as a result of the image processing.

The present disclosure provides an image processing method and so forth that are capable of obtaining an image in which a target region is effectively highlighted.

### [Solution to Problem]

In accordance with an aspect of the present disclosure, an image processing method includes: obtaining an input image; setting a first region and a second region different from the first region, in a region of the input image obtained; calculating an overall representative brightness value that is a representative brightness value of a plurality of pixels included in the input image; calculating a first representative brightness value that is a representative brightness value of a plurality of first pixels included in the first region; setting, according to the first representative brightness value and the overall representative brightness value, a first parameter of first gamma correction to cause a brightness to increase by a greater degree as the first representative brightness value is smaller and cause the brightness to increase by a greater degree as the overall representative brightness value is greater, the first gamma correction being correction for increasing the brightness as compared with reference gamma correction based on a reference parameter; and performing gamma correction on the input image by performing the first gamma correction based on the first parameter on the first region of the input image, and outputting an output image obtained through the gamma correction.

In accordance with another aspect of the present disclosure, an image processing method includes: obtaining an input image; setting a first region and a second region different from the first region, in a region of the input image obtained; calculating an overall representative frequency value that is a representative spatial frequency value of a plurality of sub-regions included in the input image; setting a second parameter of second gamma correction that decreases a brightness as compared with reference gamma correction based on a reference parameter; and performing gamma correction on the input image by performing the second gamma correction based on the second parameter on the second region of the input image, and outputting an output image obtained through the gamma correction, wherein the setting of the second parameter includes (i) calculating, according to the overall representative frequency value, a third parameter to cause, when the overall representative frequency value is greater than a first threshold, the brightness to decrease by a greater degree as the overall representative frequency value is greater, and (ii) setting the third parameter calculated, as the second parameter.

General or specific aspects of the present disclosure may be implemented to a system, a device, an integrated circuit, a computer program, a non-transitory computer-readable recording medium such as a Compact Disc-Read Only Memory (CD-ROM), or any given combination thereof.

### [Advantageous Effects of Invention]

The image processing method according to the present disclosure is capable of obtaining an image in which a target region is effectively highlighted.

### [Brief Description of Drawings]

[FIG. 1]

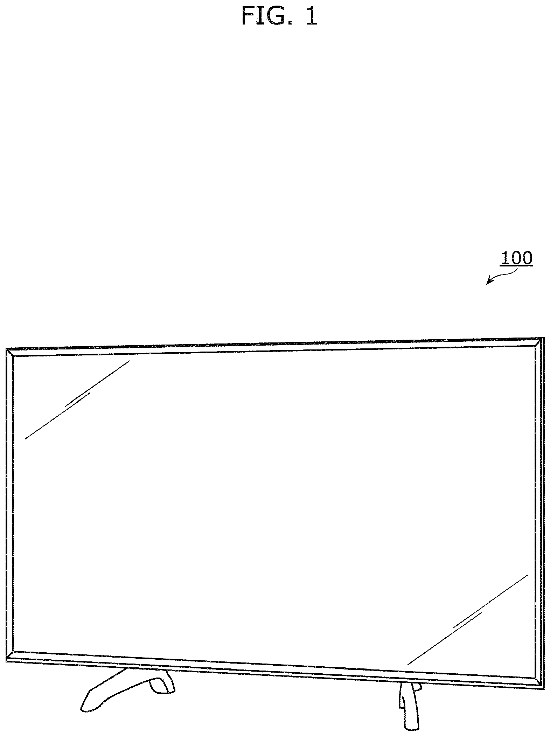

   FIG. 1 is a perspective view illustrating an example of an external view of a display apparatus according to the present embodiment.
[FIG. 2]

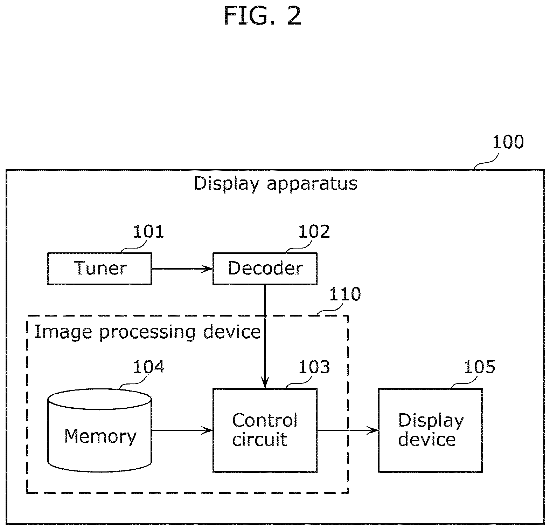

   FIG. 2 is a block diagram illustrating an example of a hardware configuration of the display apparatus according to the present embodiment.
[FIG. 3]

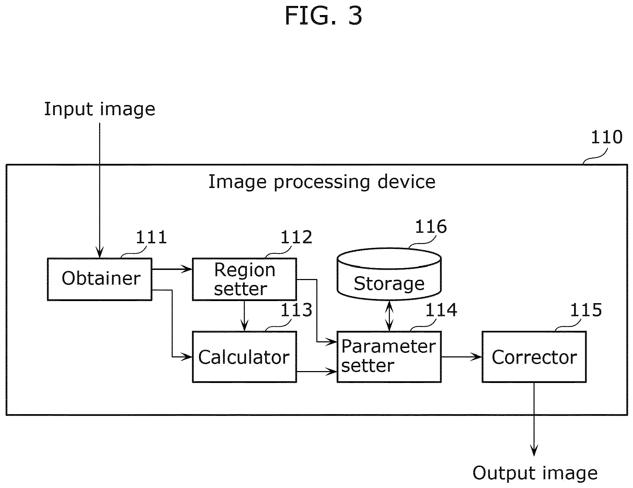

   FIG. 3 is a block diagram illustrating an example of a functional configuration of an image processing device according to the present embodiment.
[FIG. 4]

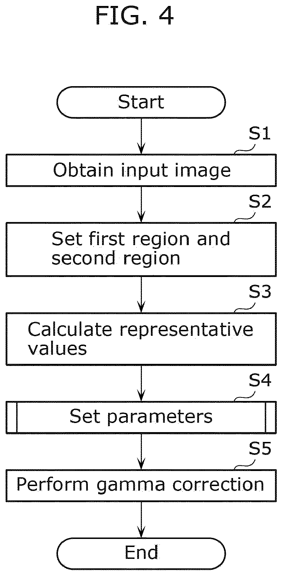

   FIG. 4 is a flowchart illustrating an example of an image processing method executed by the image processing device according to the present embodiment.
[FIG. 5]

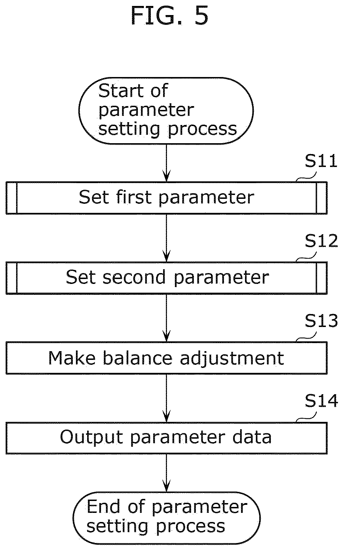

   FIG. 5 is a flowchart illustrating an example of a parameter setting process.
[FIG. 6]

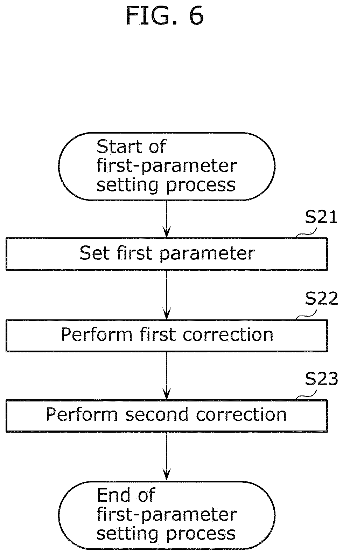

   FIG. 6 is a flowchart illustrating an example of a first-parameter setting process.
[FIG. 7]

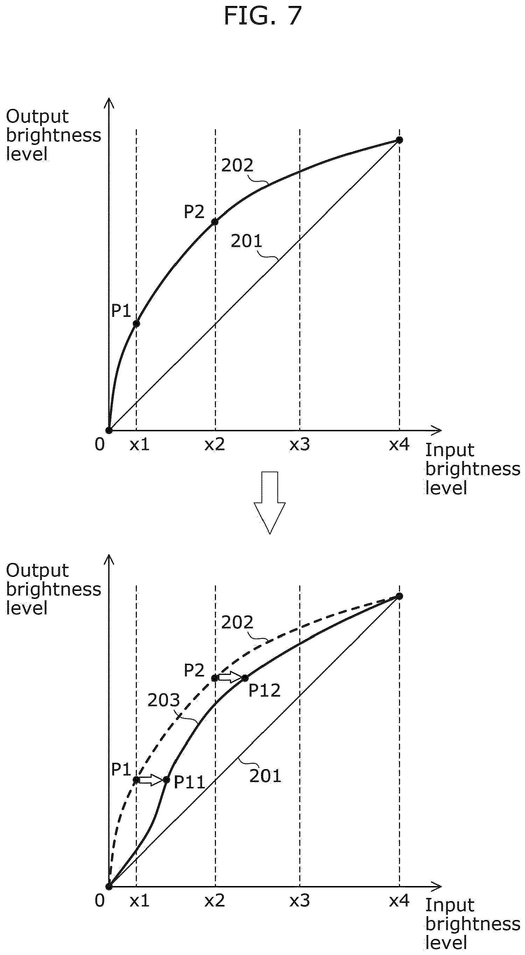

   FIG. 7 illustrates first correction performed on the first parameter of first gamma correction.
[FIG. 8]

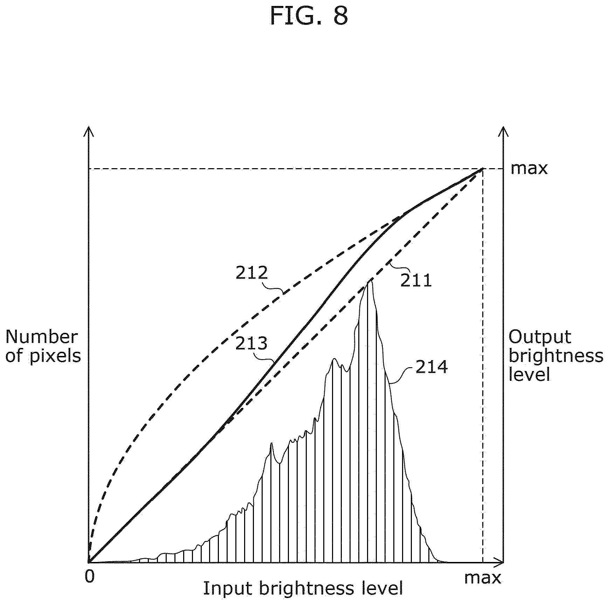

   FIG. 8 illustrates second correction performed on the first parameter of the first gamma correction.
[FIG. 9]

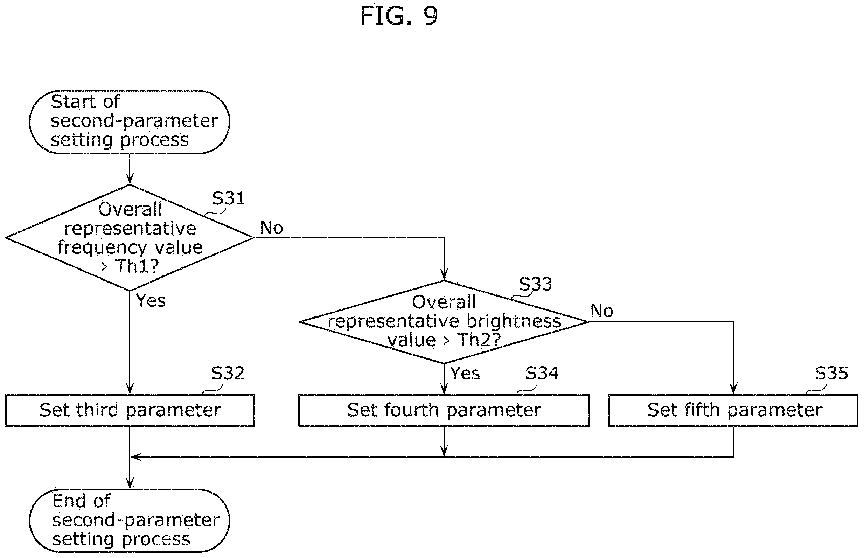

   FIG. 9 is a flowchart illustrating an example of a second-parameter setting process.
[FIG. 10]

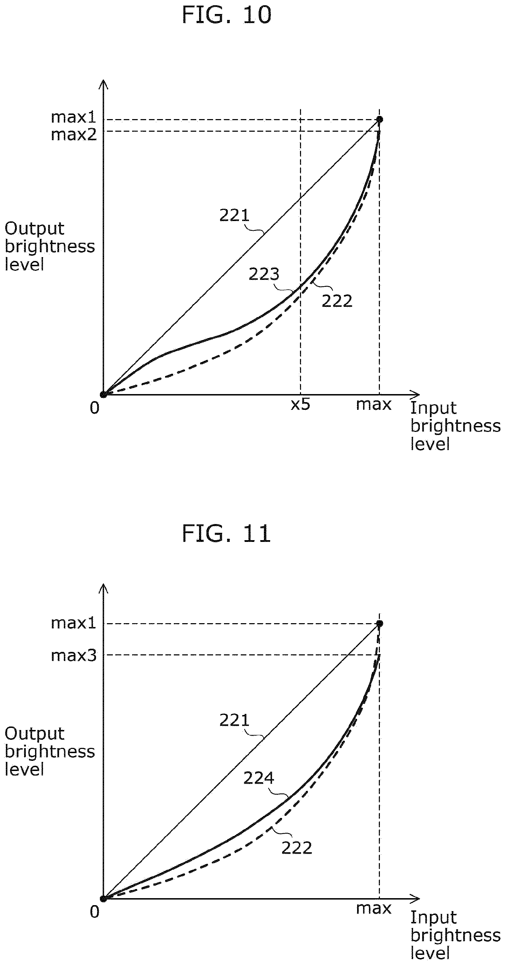

   FIG. 10 illustrates a process for correcting a gamma curve of second gamma correction for a low average brightness.
[FIG. 11]
   FIG. 11 illustrates a process for correcting a gamma curve of the second gamma correction for a high average brightness.
[FIG. 12]

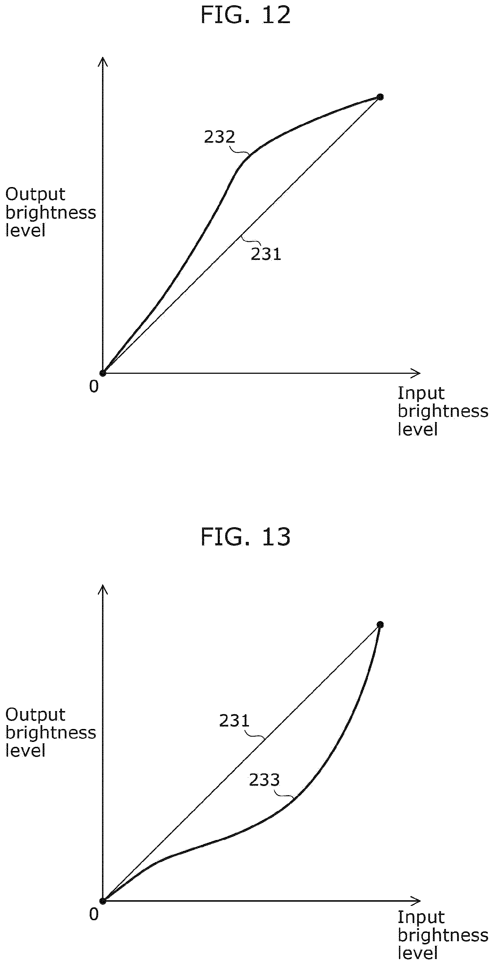

   FIG. 12 illustrates balance adjustment made to the first gamma correction.
[FIG. 13]
   FIG. 13 illustrates balance adjustment made to the second gamma correction.

### [Description of Embodiment]

In accordance with an aspect of the present disclosure, an image processing method includes: obtaining an input image; setting a first region and a second region different from the first region, in a region of the input image obtained; calculating an overall representative brightness value that is a representative brightness value of a plurality of pixels included in the input image; calculating a first representative brightness value that is a representative brightness value of a plurality of first pixels included in the first region; setting, according to the first representative brightness value and the overall representative brightness value, a first parameter of first gamma correction to cause a brightness to increase by a greater degree as the first representative brightness value is smaller and cause the brightness to increase by a greater degree as the overall representative brightness value is greater, the first gamma correction being correction for increasing the brightness as compared with reference gamma correction based on a reference parameter; and performing gamma correction on the input image by performing the first gamma correction based on the first parameter on the first region of the input image, and outputting an output image obtained through the gamma correction.

In this case, the first parameter of the first gamma correction is set such that the brightness increases by a greater degree as the first representative brightness value is smaller. Thus, the brightness of the first region is corrected so that the darker the first region is, the lighter the first region becomes. Moreover, the first parameter is set such that the brightness increases by a greater degree as the overall representative brightness value is greater. Thus, the brightness of the first region is corrected so that the lighter the whole input image is, the lighter the first region becomes. This allows the first region of the input image to be effectively highlighted.

Furthermore, it is possible that the image processing method further includes: calculating an overall representative frequency value that is a representative spatial frequency value of a plurality of sub-regions included in the input image; and setting a second parameter of second gamma correction that decreases the brightness as compared with the reference gamma correction, wherein the performing of the gamma correction further includes performing the second gamma correction based on the second parameter on the second region of the input image, and the setting of the second parameter includes (i) calculating, according to the overall representative frequency value, a third parameter to cause, when the overall representative frequency value is greater than a first threshold, the brightness to decrease by a greater degree as the overall representative frequency value is greater, and (ii) setting the third parameter calculated, as the second parameter.

As the number of focus regions in the input image increases, these focus regions are typically more likely to be prominent. Thus, if the overall representative frequency value is greater than the first threshold, the second parameter is set such that the brightness decreases by a greater degree as the overall representative frequency value is greater. This allows the second region to be darkened and thus less prominent. As a result, the first region of the input image can be effectively highlighted.

Furthermore, it is possible that when the overall representative frequency value is smaller than the first threshold, the setting of the second parameter includes (i) calculating, when the overall representative brightness value is greater than a second threshold, a fourth parameter to cause the brightness to decrease by a fixed degree regardless of the overall representative frequency value, and setting the fourth parameter calculated, as the second parameter, and (ii) calculating, when the overall representative brightness value is smaller than the second threshold, a fifth parameter according to the overall representative frequency value to cause the brightness to decrease by a smaller degree as the overall representative frequency value is smaller, and setting the fifth parameter calculated, as the second parameter.

Furthermore, it is possible that the setting of the first region and the second region on the basis of the input image includes setting, for each of the plurality of sub-regions included in the input image, an index value used as an indicator that indicates that (i) the sub-region having a value closer to a first value is more likely to be the first region and less likely to be the second region, and (ii) the sub-region having a value closer to a second value different from the first value is less likely to be the first region and more likely to be the second region, and the setting of the second parameter includes: (i) setting, as the first parameter, a sixth parameter of sixth gamma correction to be achieved between the first gamma correction and the reference gamma correction such that: as the index value is closer to the first value, the sixth gamma correction becomes more similar to the first gamma correction; and as the index value is closer to a third value indicating that a possibility that the sub-region is the first region is equal to a possibility that the sub-region is the second region, the sixth gamma correction becomes more similar to the reference gamma correction, and (ii) setting, as the second parameter, a seventh parameter of seventh gamma correction to be achieved between the second gamma correction and the reference gamma correction such that: as the index value is closer to the second value, the seventh gamma correction becomes more similar to the second gamma correction; and as the index value is closer to the third value, the seventh gamma correction becomes more similar to the reference gamma correction.

In this case, if the possibility of being the first region is close to the possibility of being the second region, adjustment is made so that the gamma correction similar to the reference gamma correction is performed. This achieves an image in which the first region is highlighted with less unnaturalness.

Furthermore, it is possible that the setting of the first parameter includes correcting the first parameter so that, when a total number of pixels in a higher brightness region having a brightness higher than a predetermined brightness among brightness regions in a plurality of first brightness histograms corresponding to the plurality of first pixels is greater than a first threshold, more shades of gray are assigned to the higher brightness region as compared with when the total number is smaller than the first threshold.

This allows the first region to be effectively highlighted according to the histograms of pixel values of all pixels in the first region.

Furthermore, it is possible that the image processing method further includes: calculating a plurality of cumulative first brightness histograms corresponding to the plurality of first pixels, wherein the setting of the first parameter further includes (i) calculating an eighth parameter of eighth gamma correction such that: as a total number of pixels with an input brightness before the gamma correction increases in the cumulative histograms calculated, an output brightness approaches a first output brightness by the gamma correction that increases the brightness more than the first gamma correction; and as the total number decreases in the cumulative histograms, the output brightness value approaches a second output brightness by the reference gamma correction, and (ii) setting the eighth parameter calculated, as the first parameter.

This allows the first region to be effectively highlighted according to the cumulative histograms.

In accordance with another aspect of the present disclosure, an image processing method includes: obtaining an input image; setting a first region and a second region different from the first region, in a region of the input image obtained; calculating an overall representative frequency value that is a representative spatial frequency value of a plurality of sub-regions included in the input image; setting a second parameter of second gamma correction that decreases a brightness as compared with reference gamma correction based on a reference parameter; and performing gamma correction on the input image by performing the second gamma correction based on the second parameter on the second region of the input image, and outputting an output image obtained through the gamma correction, wherein the setting of the second parameter includes (i) calculating, according to the overall representative frequency value, a third parameter to cause, when the overall representative frequency value is greater than a first threshold, the brightness to decrease by a greater degree as the overall representative frequency value is greater, and (ii) setting the third parameter calculated, as the second parameter.

As the number of focus regions in the input image increases, these focus regions are typically more likely to be prominent. Thus, if the overall representative frequency value is greater than the first threshold, the second parameter is set such that the brightness decreases by a greater degree as the overall representative frequency value is greater. This allows the second region to be darkened and thus less prominent. As a result, the first region of the input image can be effectively highlighted.

Furthermore, it is possible that the image processing method further includes: calculating an overall representative brightness value that is a representative brightness value of a plurality of pixels included in the input image, wherein when the overall representative frequency value is smaller than the first threshold, the setting of the second parameter includes (i) calculating, when the overall representative brightness value is greater than a second threshold, a fourth parameter to cause the brightness to decrease by a fixed degree regardless of the overall representative frequency value, and setting the fourth parameter calculated, as the second parameter, and (ii) calculating, when the overall representative brightness value is smaller than the second threshold, a fifth parameter according to the overall representative frequency value to cause the brightness to decrease by a smaller degree as the overall representative frequency value is smaller, and setting the fifth parameter calculated, as the second parameter.

General or specific aspects of the present disclosure may be implemented to a system, a device, an integrated circuit, a computer program, a non-transitory computer-readable recording medium such as a Compact Disc-Read Only Memory (CD-ROM), or any given combination thereof.

Hereinafter, a certain exemplary embodiment will be described in detail with reference to the accompanying Drawings. However, unnecessarily detailed description may be omitted. For example, detailed explanation of a well-known matter and repeated description of substantially identical structures may be omitted. Such omission makes the following description exclude unnecessary redundancy and be easily understood by those skilled in the art.

It should be noted that the inventors provide the accompanied drawings and the following description to allow those skilled in the art to well understand the present disclosure without intending to limit the subject according to the appended claims to the drawings and description.

### [Embodiment]

The following describes Embodiment with reference to FIG. 1 to FIG. 10.

### [Configuration and Operation]

FIG. 1 is a perspective view illustrating an example of an external view of a display apparatus according to the present embodiment.

As illustrated in FIG. 1, display apparatus 100 has an appearance of a common flat-panel display. A body of display apparatus 100 houses a display device including a display panel. For example, display apparatus 100 is a liquid crystal display or an organic EL display.

FIG. 2 is a block diagram illustrating an example of a hardware configuration of the display apparatus according to the present embodiment.

As illustrated in FIG. 2, display apparatus 100 includes tuner 101, decoder 102, control circuit 103, memory 104, and display device 105. Control circuit 103 and memory 104 are included in image processing device 110. Thus, display apparatus 100 includes image processing device 110.

Tuner 101 converts an analog signal included in a broadcast wave received from an antenna, which is not shown in the drawing, into a digital signal, that is, coded data. Then, tuner 101 outputs this coded data obtained through the conversion to decoder 102.

Decoder 102 decodes the coded data obtained from tuner 101, and then outputs image data obtained through the decoding to control circuit 103. The image data represents an image including a moving image or a still image.

Control circuit 103 performs predetermined image processing on the image represented by the image data outputted from decoder 102. For a moving image, control circuit 103 performs predetermined image processing for each of a plurality of pictures included in the moving image. For a still image, control circuit 103 performs predetermined image processing. Then, control circuit 103 outputs image data (also referred to as "processed image data") representing an image obtained through the image processing (this image is also referred to as "processed image"), to display device 105. This allows display device 105 to display the processed image.

Note that decoder 102 and control circuit 103 may be implemented by a single circuit. Note also that control circuit 103 may be implemented by a general-purpose processor, such as a CPU, executing a predetermined control program, or by a dedicated circuit. More specifically, functions of display apparatus 100 may be implemented by either software or hardware.

Memory 104 may store a control program or various kinds of data used to execute the control program. For example, memory 104 is a non-volatile memory.

Display device 105 displays the processed image represented by the processed image data outputted by control circuit 103. Display device 105 is a display panel, such as a liquid crystal panel or an organic EL panel.

Next, a functional configuration of the image processing device is described.

FIG. 3 is a block diagram illustrating an example of the functional configuration of the image processing device according to the present embodiment. FIG. 4 is a flowchart illustrating an example of an image processing method executed by the image processing device according to the present embodiment.

Hereinafter, functional blocks of image processing device 110 are described with reference to FIG. 3. Moreover, a processing flow executed by the functional blocks is described with reference to FIG. 4.

Image processing device 110 includes obtainer 111, region setter 112, calculator 113, parameter setter 114, and corrector 115. Image processing device 110 may also include storage 116.

Obtainer 111 obtains image data (S1). For example, obtainer 111 obtains an input image by obtaining the image data from decoder 102 of display apparatus 100.

Region setter 112 sets a first region and a second region that is different from the first region, in a region of the input image obtained by obtainer 111 (S2). The first region of the input image is a target region to be highlighted. For example, the first region shows a subject, such as a person. The second region of the input image is a region that is not to be highlighted. For example, the second region shows a background different from the subject. Region setter 112 may set the first region and the second region of the input image by using a predetermined algorithm. Alternatively, region setter 112 may further obtain region information indicating the first region or the second region of the input image and then set the first region and the second region in the input image by using the obtained region information. The region information may be included in the input image, or separate from the input image. The region information is provided corresponding to the input image. For a plurality of input images, a different piece of region information is provided for each of the plurality of input images.

For example, the region information is represented by an image having the same matrix of pixels as the input image. More specifically, the number of vertical pixels and the number of horizontal pixels of the region information are the same as the number of vertical pixels and the number of horizontal pixels of the input image. Each of the pixels of the region information has a pixel value indicating whether the pixel is the first region or the second region. For example, the closer a pixel value is to a first value, the more likely a pixel having this pixel value may be the first region and thus the less likely this pixel may be the second region. Moreover, for example, the closer a pixel value is to a second value different from the first value, the less likely a pixel having this pixel value may be the first region and thus the more likely this pixel may be the second region. Note that a pixel value of a pixel in the region information is an example of an index value used as an indicator that indicates that a pixel value closer to the first value is more likely to be the first region and that a pixel value closer to the second value is more likely to be the second region.

Here, the first value may be a maximum value as a pixel value and the second value may be a minimum value as a pixel value. For example, each pixel value may be indicated by eight bits representing a number from 0 to 255. In this case, the first value is 255 whereas the second value is 0. Although the region information indicates, for each pixel, whether the pixel is the first region or the second region, this is not intended to be limiting. Whether the pixel is the first region or the second region may be indicated for each of a plurality of sub-regions of the input image.

Calculator 113 calculates an overall representative brightness value, a first representative brightness value, and an overall representative frequency value (S3). The overall representative brightness value is a representative brightness value of a plurality of pixels included in the input image. The overall representative brightness value is calculated using all brightness values of the plurality of pixels included in the input image. For example, the overall representative brightness value is an average value or a median value of the all brightness values of the plurality of pixels.

The first representative brightness value is a representative value of brightness values of a plurality of first pixels included in the first region. The first representative brightness value is calculated using all brightness values of the plurality of first pixels included in the first region. For example, the first representative brightness value is an average value or a median value of the all brightness values of the plurality of first pixels. The first region used for calculating the first representative brightness value is determined using the region information binarized according to a threshold that is a predetermined set value. More specifically, "1" is assigned as the binarized region information to indicate that a region including a plurality of pixels having pixel values each closer to the first value than to the set value is the first region, for example. Moreover, "0" is assigned as the binarized region information to indicate that a region including a plurality of pixels having pixel values each closer to the second value than to the set value is the second region, for example.

The overall representative frequency value is a representative spatial frequency value of a plurality of sub-regions included in the input image. More specifically, to generate a high frequency image, calculator 113 calculates a pixel value for each of the plurality of pixels in the input image by applying a high-pass filter that uses a plurality of brightness values (Y signal values, for example) of pixels of a 7 by 7 matrix of pixels including the current pixel as a reference pixel (a center pixel, for example). A pixel having a greater pixel value in the high frequency image has a higher frequency component. Calculator 113 calculates an average value or a median value of the pixel values of the plurality of pixels in the high frequency image, as the overall representative frequency value.

Moreover, calculator 113 calculates a plurality of first brightness histograms corresponding to the plurality of first pixels included in the first region. Calculator 113 also calculates a plurality of first brightness cumulative histograms. Here, for calculating the first brightness histograms, calculator 113 determines the first region using the aforementioned binarized region information.

Parameter setter 114 sets gamma correction parameters to be applied to the plurality of pixels included in the input image (S4). More specifically, parameter setter 114 sets a first parameter of first gamma correction for the first region and also sets a second parameter of second gamma correction for the second region. The first gamma correction is performed to increase brightness more than reference gamma correction based on a reference parameter. The second gamma correction is performed to decrease the brightness more than the reference gamma correction. The parameter setting process performed by parameter setter 114 is described in detail later, with reference to FIG. 5.

Corrector 115 performs gamma correction on the input image by performing gamma correction for each of the pixels of the input image using a parameter that is set by parameter setter 114 for the pixel, and then outputs an output image obtained through the gamma correction (S5). More specifically, corrector 115 performs the first gamma correction based on the set first parameter on the first region of the input image. Moreover, corrector 115 performs the second gamma correction based on the set second parameter on the second region of the input image.

In this way, corrector 115 performs the first gamma correction to increase the brightness of the first region and also performs the second gamma correction to decrease the brightness of the second region. As a result, the brightness of the first region is higher than that of the second region. This allows corrector 115 to perform the image processing to highlight the first region with respect to the second region in the input image.

Storage 116 may store information used in the processes performed by processors that are obtainer 111, region setter 112, calculator 113, parameter setter 114, and corrector 115. Storage 116 may also store results of the processes performed by these processors.

Here, obtainer 111, region setter 112, calculator 113, parameter setter 114, and corrector 115 are implemented by control circuit 103, for example. Storage 116 is implemented by memory 104, for example.

### [Parameter Setting Process]

The parameter setting process is described in detail, with reference to FIG. 5. FIG. 5 is a flowchart illustrating an example of the parameter setting process.

Parameter setter 114 sets the first parameter of the first gamma correction (S11).

Here, the first-parameter setting process is described in detail, with reference to FIG. 6 to FIG. 8. FIG. 6 is a flowchart illustrating an example of the first-parameter setting process. FIG. 7 illustrates first correction performed on the first parameter of first gamma correction. FIG. 8 illustrates second correction performed on the first parameter of the first gamma correction.

As illustrated in FIG. 6, parameter setter 114 sets, according to the calculated first representative brightness value and the calculated overall representative brightness value, the first parameter such that the brightness increases by a greater degree as the first representative brightness value is smaller and that the brightness increases by a greater degree as the overall representative brightness value is greater (S21). Parameter setter 114 sets a smaller gamma value as the gamma correction parameter if the first representative brightness value is smaller, and sets a smaller gamma value as the gamma correction parameter if the overall representative brightness value is greater. For example, for a smaller first representative brightness value, parameter setter 114 sets a gamma value closer to 1.2 as the gamma correction parameter. Moreover, for a greater overall representative brightness value, parameter setter 114 sets a gamma value closer to 1.2 as the gamma correction parameter, for example. This allows parameter setter 114 to determine gamma curve 202 illustrated in FIG. 7.

FIG. 7 illustrates gamma curve 201 obtained by the reference gamma correction, gamma curve 202 by the first gamma correction before the first correction is performed, and gamma curve 203 by the first gamma correction after the first correction is performed. As illustrated in FIG. 7, increase in the brightness of gamma curve 203 is reduced with respect to gamma curve 202 to prevent flared highlights.

Note that the gamma correction parameter is used for determining a shape of the gamma curve. More specifically, once the gamma correction parameter is obtained, the shape of the gamma curve is uniquely determined. The gamma correction parameter includes a gamma value, for example.

For example, the gamma value of gamma curve 201 is 2.2. A gamma value of gamma curve 202 is smaller than 2.2, for example. Gamma curve 203 has a shape obtained by deforming gamma curve 202. The brightness increases as the gamma value of the gamma curve decreases.

Here, a brightness region with 0 to ×1 of brightness refers to a lower brightness region, a brightness region with ×1 to x2 of brightness refers to a medium brightness region, and a brightness region with ×3 to ×4 of brightness refers to a higher brightness region. Brightness ×1 is higher than brightness 0, and brightness x2 is higher than brightness ×1. Brightness x3 is higher than brightness x2, and brightness x4 is higher than brightness x3. For example, brightness x2 is an input brightness level of gamma curve 202 at which a slope of a line tangent to gamma curve 202 is 1. Brightness ×1 is a half of brightness x2, for example.

Then, parameter setter 114 performs the first correction to correct the first parameter so that, if the number of pixels in a higher brightness region among brightness regions in the plurality of first brightness histograms corresponding to the plurality of first pixels of the first region is greater than a predetermined number, more shades of gray are assigned to the higher brightness region as compared with if the number is smaller than the predetermined number (S22). More specifically, in this case, parameter setter 114 moves point P2, where the input brightness is x2 on gamma curve 202, to point P12 where the input value is greater than that of point P2. As a result, parameter setter 114 generates gamma curve 203 by which more shades of gray are assigned to the higher brightness region. Moreover, parameter setter 114 moves point P1, where the input brightness is ×1 on gamma curve 202, to point P11 where the input value is greater than that of point P1. As a result, parameter setter 114 generates gamma curve 203 by which shades of gray in the lower brightness region are reduced and also shades of gray in the medium brightness region are maintained.

The above correction is not intended to be limiting. Parameter setter 114 may correct the first parameter so that, if the number of pixels in the medium brightness region is greater than a predetermined number, more shades of gray are assigned to the medium brightness region as compared with if the number is smaller than the predetermined number. Moreover, parameter setter 114 may correct the first parameter so that, if the number of pixels in a lower brightness region is greater than a predetermined number, more shades of gray are assigned to the lower brightness region as compared with if the number is smaller than the predetermined number. In this way, parameter setter 114 may correct the first parameter according to the respective numbers of pixels in the brightness regions so that more shades of gray are assigned to the brightness region having the greater number of pixels.

Next, parameter setter 114 performs the second correction to correct the first parameter (S23). More specifically, parameter setter 114 performs the second correction to correct the first parameter to achieve eighth gamma correction. By the eighth gamma correction, as the number of pixels having an input brightness before the gamma correction increases in the calculated cumulative histograms, the output brightness approaches a first output brightness by the gamma correction of gamma curve 202 that increases the brightness more than the first gamma correction. At the same time, as the number of pixels decreases in the cumulative histograms, the output brightness approaches a second output brightness by the reference gamma correction. The eighth gamma correction is determined according to an eighth parameter.

Here, a specific example of the second correction is described with reference to FIG. 8. FIG. 8 illustrates gamma curve 211 obtained by the reference gamma correction, gamma curve 212 by the first gamma correction before the second correction is performed, gamma curve 213 by the first gamma correction after the second correction is performed, and histogram 214 of brightness of all pixels in the first region. Gamma curves 211, 212, and 213 and histogram 214 share the horizontal axis that represents the input brightness level.

For example, parameter setter 114 calculates, for each of a plurality of input brightness levels, an output brightness level of gamma curve 213 to be obtained after the second correction. This output brightness level is calculated by obtaining a weighted average of a first output brightness level of gamma curve 211 corresponding to the current input brightness level and a second output brightness level of gamma curve 212 corresponding to the current input brightness level. This weighted average is obtained using a weight corresponding to a cumulative value of the histogram up to the current input brightness level. For the first output brightness level, the weight to obtain the weighted average is associated with the number of pixels in the first region each having a value greater than the current input brightness level. For the second output brightness level, the weight is associated with the number of pixels in the first region each having a value that is at most the current input brightness level. In this way, parameter setter 114 performs the second correction to generate gamma curve 213 to be obtained after the second correction.

Note that parameter setter 114 may not perform at least one of the first correction performed on the first parameter or the second correction performed on the first parameter. More specifically, parameter setter 114 may use the first parameter set according to the first representative brightness value and the overall representative brightness value, as the first parameter of the first gamma correction in subsequent processing. Alternatively, parameter setter 114 may use, in subsequent processing, the first parameter of gamma curve 203 obtained after the first correction. Alternatively, parameter setter 114 may use, in subsequent processing, the first parameter of the gamma curve obtained after only the second correction is performed.

Referring back to the description with reference to FIG. 5, parameter setter 114 next sets the second parameter of the second gamma correction (S12).

Here, a second-parameter setting process is described in detail, with reference to FIG. 9. FIG. 9 is a flowchart illustrating an example of the second-parameter setting process.

In the second-parameter setting process as illustrated in FIG. 9, parameter setter 114 determines whether the overall representative frequency value calculated by calculator 113 is greater than first threshold Th1 (S31).

If the overall representative frequency value is greater than first threshold Th1 (Yes in S31), parameter setter 114 calculates, according to the overall representative frequency value, a third parameter such that the brightness decreases by a greater degree as the overall representative frequency value is greater. Then, parameter setter 114 sets the calculated third parameter as the second parameter (S32). In this case, parameter setter 114 sets a greater gamma value as the gamma correction parameter if the overall representative frequency value is greater. For example, for a greater overall representative frequency value, parameter setter 114 sets a gamma value closer to 3.2 as the gamma correction parameter.

If the overall representative frequency value is smaller than first threshold Th1 (No in S31), parameter setter 114 determines whether the overall representative brightness value is greater than second threshold Th2 (S33).

If the overall representative brightness value is greater than second threshold Th2 (Yes in S33), parameter setter 114 calculates a fourth parameter such that the brightness decreases by a fixed degree regardless of the overall representative frequency value. Then, parameter setter 114 sets the calculated fourth parameter as the second parameter (S34). In this case, parameter setter 114 sets a fixed gamma value as the gamma correction parameter regardless of the overall representative frequency value.

If the overall representative brightness value is smaller than second threshold Th2 (No in S33), parameter setter 114 calculates, according to the overall representative frequency value, a fifth parameter such that the brightness decreases by a smaller degree as the overall representative frequency value is smaller. Then, parameter setter 114 sets the calculated fifth parameter as the second parameter (S35). In this case, parameter setter 114 sets a smaller gamma value as the gamma correction parameter if the overall representative frequency value is smaller. For example, for a smaller overall representative frequency value, parameter setter 114 sets a gamma value closer to 2.2 as the gamma correction parameter.

Parameter setter 114 may correct the second parameter determined as described above, according to the overall representative brightness value. A specific example of the correction process is described with reference to FIG. 10 and FIG. 11.

FIG. 10 illustrates a process for correcting a gamma curve of the second gamma correction when the average brightness is dark. FIG. 11 illustrates a process for correcting a gamma curve of the second gamma correction when the average brightness is lighter.

FIG. 10 and FIG. 11 illustrate gamma curve 221 obtained by the reference gamma correction, gamma curve 222 by the second gamma correction before the correction is performed, and gamma curves 223 and 224 by the second gamma correction after the correction is performed.

If the overall representative brightness value is smaller than a third threshold, or more specifically, if the average brightness is dark, parameter setter 114 may generate gamma curve 223 through correction that deforms gamma curve 222, as illustrated in FIG. 10. For example, gamma curve 223 has a shape to increase the output brightness level in a lower brightness region with brightness lower than brightness x5 of gamma curve 222. Moreover, gamma curve 223 has maximum output brightness level max2 lower than maximum output brightness level max1 of gamma curve 222 and also has a shape similar to the shape of gamma curve 222 in a higher brightness region with brightness higher than brightness x5.

If the overall representative brightness value is greater a fourth threshold, or more specifically, if the average brightness is light, parameter setter 114 may generate gamma curve 224 through correction that deforms gamma curve 222, as illustrated in FIG. 11. For example, gamma curve 224 has a shape to increase the output brightness level in a lower brightness region with brightness lower than brightness x5 of gamma curve 222 by a smaller degree than the degree of gamma curve 223. Moreover, gamma curve 224 has maximum output brightness level max3 lower than maximum output brightness level max2 of gamma curve 223 and also has a shape similar to the shape of gamma curve 222 in a higher brightness region with brightness higher than brightness x5.

In this way, parameter setter 114 may adjust a degree by which gamma curve 222 is to be corrected, according to the overall representative brightness value.

Referring back to the description with reference to FIG. 5, parameter setter 114 next makes balance adjustments to the first gamma correction performed based on the set first parameter and to the second gamma correction performed based on the set second parameter (S13).

FIG. 12 illustrates balance adjustment made to the first gamma correction. FIG. 12 illustrates gamma curve 231 by the reference gamma correction and gamma curve 232 by the first gamma correction performed in Step S11.

Parameter setter 114 calculates a sixth parameter of sixth gamma correction such that the correction is achieved between gamma curve 232 of the first gamma correction and gamma curve 231 of the reference gamma correction as illustrated in FIG. 12. As a pixel value of the region information is closer to the first value, the sixth gamma correction causes the output brightness level to approach gamma curve 232 of the first gamma correction. As the pixel value is closer to a third value indicating that a possibility that the current pixel is the first region is equal to a possibility that the current pixel is the second region, the sixth gamma correction causes the output brightness level to approach gamma correction 231 of the reference gamma correction. Then, parameter setter 114 sets the obtained sixth parameter as the first parameter.

FIG. 13 illustrates balance adjustment made to the second gamma correction. FIG. 13 illustrates gamma curve 231 by the reference gamma correction and gamma curve 233 by the second gamma correction performed in Step S12.

Parameter setter 114 calculates a seventh parameter of seventh gamma correction such that the correction is achieved between gamma curve 233 of the second gamma correction. As a pixel value of the region information is closer to the second value, the seventh gamma correction causes the output brightness level to approach gamma curve 233 of the second gamma correction. As the pixel value is closer to the third value, the seventh gamma correction causes the output brightness level to approach the curve of the reference gamma correction. Then, parameter setter 114 sets the obtained seventh parameter as the second parameter.

After this, parameter setter 114 outputs the set first parameter and the set second parameter as parameter data (S14).

### [Advantageous Effects etc.]

Image processing device 110 according to the present embodiment sets the first parameter of the first gamma correction such that the brightness increases by a greater degree as the first representative brightness value is smaller. Thus, image processing device 110 is capable of correcting the brightness of the first region so that the darker the first region is, the lighter the first region becomes. Moreover, image processing device 110 sets the first parameter such that the brightness increases by a greater degree as the overall representative brightness value is greater. Thus, image processing device 110 is capable of correcting the brightness of the first region so that the lighter the whole input image is, the lighter the first region becomes. This allows the first region of the input image to be effectively highlighted.

Furthermore, if the overall representative frequency value is greater than the first threshold, image processing device 110 according to the present embodiment sets the second parameter such that the brightness decreases by a greater degree as the overall representative frequency value is greater. Thus, image processing device 110 is capable of darkening the second region to make this region less prominent. This allows the first region of the input image to be effectively highlighted.

Moreover, if the possibility for the pixel to be the first region is close to the possibility for the pixel to be the second region, image processing device 110 according to the present embodiment makes adjustment so that gamma correction similar to the reference gamma correction is performed. This achieves an image in which the first region is highlighted with less unnaturalness.

Furthermore, if the number of pixels in a higher brightness region having a brightness higher than a predetermined brightness among brightness regions in the plurality of first brightness histograms corresponding to the plurality of first pixels is greater than the first threshold, image processing device 110 according to the present embodiment corrects, in the parameter setting process, the first parameter such that more shades of gray are assigned to the higher brightness region as compared with if the number is smaller than the first threshold. This allows the first region to be effectively highlighted according to the histograms of pixel values of all pixels in the first region.

Moreover, image processing device 110 according to the present embodiment calculates the eighth parameter of the eighth gamma correction. With the eighth parameter, as the number of pixels having an input brightness before the gamma correction increases in the calculated cumulative histograms, the output brightness approaches the first output brightness by the gamma correction that increases the brightness more than the first gamma correction. At the same time, as the number of pixels decreases in the cumulative histograms, the output brightness approaches the second output brightness by the reference gamma correction. The calculated eighth parameter is set as the first parameter. This allows the first region to be effectively highlighted according to the cumulative histograms.

### [Variations]

(1) According to the embodiment described above, both the first parameter and the second parameter are set in the parameter setting process. However, either one of these parameters may be set. In this case, the gamma correction is performed only on the region corresponding to the set parameter. More specifically, if only the first parameter is set, the first gamma correction based on the first parameter is performed only on the first region of the input image. If only the second parameter is set, the second gamma correction based on the second parameter is performed only on the second region of the input image.
(2) According to the embodiment described above, both the first correction and the second correction are performed in the parameter setting process. However, either one of these corrections may not be performed. More specifically, the image may be corrected according to the first gamma correction based on the first parameter set in Step S21. Alternatively, the image may be corrected using the gamma curve of the first gamma correction performed after only the first correction is performed without performing the second correction. Alternatively, the image may be corrected using the gamma curve of the first gamma correction performed after only the second correction is performed without performing the first correction.
(3) Image processing device 110 according to the present embodiment is included in display apparatus 100. However, this is not intended to be limiting. Image processing device 110 may be included in an image pickup device. In this case, such an image processing device obtains image data from an image sensor provided in the image pickup device, performs the image processing method described in the present embodiment, and then outputs an output image.
(4) According to the present embodiment, display device 100 includes tuner 101, and obtainer 111 is implemented by tuner 101. However, this is not intended to be limiting. Obtainer 111 may obtain image data by reading the image data recorded on a recording medium, such as an optical disk, an SD card, a hard disk drive (HDD), or a solid state drive (SDD). In this case, obtainer 111 may be implemented by an electrical device, such as an optical pickup that reads an optical disk. Moreover, obtainer 111 may obtain image data from an external server via a network, such as the Internet. In this case, obtainer 111 may be implemented by a communication IF that communicates with the external server. Furthermore, obtainer 111 may obtain image data from an external device connected via an external IF, such as a high-definition multimedia interface (HDMI [registered trademark]) terminal, a universal serial bus (USB) terminal, or an RCA terminal.

Each of the elements in the above embodiment may be configured in the form of an exclusive hardware product, or may be realized by executing a software program suitable for the element. Each of the elements may be realized by means of a program executing unit, such as a central processing unit (CPU) or a processor, reading and executing the software program recorded on a recording medium such as a hard disk or semiconductor memory. Here, software realizing an image decoding device or the like according to the above-described embodiment is a program described below.

More specifically, the program causes a computer to execute an image processing method including: obtaining an input image; setting a first region and a second region different from the first region, in a region of the input image obtained; calculating an overall representative brightness value that is a representative brightness value of a plurality of pixels included in the input image; calculating a first representative brightness value that is a representative brightness value of a plurality of first pixels included in the first region; setting, according to the first representative brightness value and the overall representative brightness value, a first parameter of first gamma correction to cause a brightness to increase by a greater degree as the first representative brightness value is smaller and cause the brightness to increase by a greater degree as the overall representative brightness value is greater, the first gamma correction being correction for increasing the brightness as compared with reference gamma correction based on a reference parameter; and performing gamma correction on the input image by performing the first gamma correction based on the first parameter on the first region of the input image, and outputting an output image obtained through the gamma correction.

Furthermore, the program causes a computer to execute an image processing method including: obtaining an input image; setting a first region and a second region different from the first region, in a region of the input image obtained; calculating an overall representative frequency value that is a representative spatial frequency value of a plurality of sub-regions included in the input image; setting a second parameter of second gamma correction that decreases a brightness as compared with reference gamma correction based on a reference parameter; and performing gamma correction on the input image by performing the second gamma correction based on the second parameter on the second region of the input image, and outputting an output image obtained through the gamma correction, wherein the setting of the second parameter includes (i) calculating, according to the overall representative frequency value, a third parameter to cause, when the overall representative frequency value is greater than a first threshold, the brightness to decrease by a greater degree as the overall representative frequency value is greater, and (ii) setting the third parameter calculated, as the second parameter.

The above embodiment has been presented as an example of the technique disclosed according to the present disclosure. The accompanying drawings and the detailed description are provided for this purpose.

Therefore, the components described in the accompanying drawings and the detailed description may include, in addition to components essential to overcoming problems, components that are not essential to overcoming problems but are included in order to exemplify the technique described above. Thus, those non-essential components should not be deemed essential due to the mere fact that the non-essential components are illustrated in the accompanying drawings and described in the detailed description.

The above embodiment is an example of the technique in the present disclosure, and thus various modifications, substitutions, additions, and omissions are possible in the scope of the claims and equivalent scopes thereof.

### [Industrial Applicability]

The present disclosure is applicable to, for example, an image processing method that is capable of effectively highlighting a target region showing a subject in an image. More specifically, the present disclosure is applicable to a display apparatus, such as a television set, or an image pickup device, such as a camera.

### [Reference Signs List]

- 100: display apparatus
- 101: tuner
- 102: decoder
- 103: control circuit
- 104: memory
- 105: display device
- 110: image processing device
- 111: obtainer
- 112: region setter
- 113: calculator
- 114: parameter setter
- 115: corrector
- 116: storage

## Claims

1. An image processing method comprising:
obtaining an input image;
setting a first region and a second region different from the first region, in a region of the input image obtained;
calculating an overall representative brightness value that is a representative brightness value of a plurality of pixels included in the input image;
calculating a first representative brightness value that is a representative brightness value of a plurality of first pixels included in the first region;
setting, according to the first representative brightness value and the overall representative brightness value, a first parameter of first gamma correction to cause a brightness to increase by a greater degree as the first representative brightness value is smaller and cause the brightness to increase by a greater degree as the overall representative brightness value is greater, the first gamma correction being correction for increasing the brightness as compared with reference gamma correction based on a reference parameter; and
performing gamma correction on the input image by performing the first gamma correction based on the first parameter on the first region of the input image, and outputting an output image obtained through the gamma correction.

2. The image processing method according to claim 1, further comprising:
calculating an overall representative frequency value that is a representative spatial frequency value of a plurality of sub-regions included in the input image; and
setting a second parameter of second gamma correction that decreases the brightness as compared with the reference gamma correction,
wherein the performing of the gamma correction further includes performing the second gamma correction based on the second parameter on the second region of the input image, and
the setting of the second parameter includes (i) calculating, according to the overall representative frequency value, a third parameter to cause, when the overall representative frequency value is greater than a first threshold, the brightness to decrease by a greater degree as the overall representative frequency value is greater, and (ii) setting the third parameter calculated, as the second parameter.

3. The image processing method according to claim 2,
wherein when the overall representative frequency value is smaller than the first threshold, the setting of the second parameter includes
(i) calculating, when the overall representative brightness value is greater than a second threshold, a fourth parameter to cause the brightness to decrease by a fixed degree regardless of the overall representative frequency value, and setting the fourth parameter calculated, as the second parameter, and
(ii) calculating, when the overall representative brightness value is smaller than the second threshold, a fifth parameter according to the overall representative frequency value to cause the brightness to decrease by a smaller degree as the overall representative frequency value is smaller, and setting the fifth parameter calculated, as the second parameter.

4. The image processing method according to one of claim 2 and claim 3,
wherein the setting of the first region and the second region on the basis of the input image includes setting, for each of the plurality of sub-regions included in the input image, an index value used as an indicator that indicates that (i) the sub-region having a value closer to a first value is more likely to be the first region and less likely to be the second region, and (ii) the sub-region having a value closer to a second value different from the first value is less likely to be the first region and more likely to be the second region, and
the setting of the second parameter includes:
(i) setting, as the first parameter, a sixth parameter of sixth gamma correction to be achieved between the first gamma correction and the reference gamma correction such that: as the index value is closer to the first value, the sixth gamma correction becomes more similar to the first gamma correction; and as the index value is closer to a third value indicating that a possibility that the sub-region is the first region is equal to a possibility that the sub-region is the second region, the sixth gamma correction becomes more similar to the reference gamma correction, and
(ii) setting, as the second parameter, a seventh parameter of seventh gamma correction to be achieved between the second gamma correction and the reference gamma correction such that: as the index value is closer to the second value, the seventh gamma correction becomes more similar to the second gamma correction; and as the index value is closer to the third value, the seventh gamma correction becomes more similar to the reference gamma correction.

5. The image processing method according to any one of claim 1 to claim 4,
wherein the setting of the first parameter includes correcting the first parameter so that, when a total number of pixels in a higher brightness region having a brightness higher than a predetermined brightness among brightness regions in a plurality of first brightness histograms corresponding to the plurality of first pixels is greater than a first threshold, more shades of gray are assigned to the higher brightness region as compared with when the total number is smaller than the first threshold.

6. The image processing method according to any one of claim 1 to claim 5, further comprising:
calculating a plurality of cumulative first brightness histograms corresponding to the plurality of first pixels,
wherein the setting of the first parameter further includes
(i) calculating an eighth parameter of eighth gamma correction such that: as a total number of pixels with an input brightness before the gamma correction increases in the cumulative histograms calculated, an output brightness approaches a first output brightness by the gamma correction that increases the brightness more than the first gamma correction; and as the total number decreases in the cumulative histograms, the output brightness value approaches a second output brightness by the reference gamma correction, and
(ii) setting the eighth parameter calculated, as the first parameter.

7. An image processing method comprising:
obtaining an input image;
setting a first region and a second region different from the first region, in a region of the input image obtained;
calculating an overall representative frequency value that is a representative spatial frequency value of a plurality of sub-regions included in the input image;
setting a second parameter of second gamma correction that decreases a brightness as compared with reference gamma correction based on a reference parameter; and
performing gamma correction on the input image by performing the second gamma correction based on the second parameter on the second region of the input image, and outputting an output image obtained through the gamma correction,
wherein the setting of the second parameter includes (i) calculating, according to the overall representative frequency value, a third parameter to cause, when the overall representative frequency value is greater than a first threshold, the brightness to decrease by a greater degree as the overall representative frequency value is greater, and (ii) setting the third parameter calculated, as the second parameter.

8. The image processing method according to claim 7, further comprising:
calculating an overall representative brightness value that is a representative brightness value of a plurality of pixels included in the input image,
wherein when the overall representative frequency value is smaller than the first threshold, the setting of the second parameter includes
(i) calculating, when the overall representative brightness value is greater than a second threshold, a fourth parameter to cause the brightness to decrease by a fixed degree regardless of the overall representative frequency value, and setting the fourth parameter calculated, as the second parameter, and
(ii) calculating, when the overall representative brightness value is smaller than the second threshold, a fifth parameter according to the overall representative frequency value to cause the brightness to decrease by a smaller degree as the overall representative frequency value is smaller, and setting the fifth parameter calculated, as the second parameter.

9. An image processing system comprising:
an obtainer that obtains an input image;
a region setter that sets a first region and a second region different from the first region, in a region of the input image obtained;
a first calculator that calculates an overall representative brightness value that is a representative brightness value of a plurality of pixels included in the input image;
a second calculator that calculates a first representative brightness value that is a representative brightness value of a plurality of first pixels included in the first region;
a parameter setter that sets, according to the first representative brightness value and the overall representative brightness value, a first parameter of first gamma correction to cause a brightness to increase by a greater degree as the first representative brightness value is smaller and cause the brightness to increase by a greater degree as the overall representative brightness value is greater, the first gamma correction being correction for increasing the brightness as compared with reference gamma correction based on a reference parameter; and
a gamma corrector that performs gamma correction on the input image by performing the first gamma correction based on the first parameter on the first region of the input image, and outputs an output image obtained through the gamma correction.

10. An image processing device comprising:
an obtainer that obtains an input image;
a region setter that sets a first region and a second region different from the first region, in a region of the input image obtained;
a first calculator that calculates an overall representative brightness value that is a representative brightness value of a plurality of pixels included in the input image;
a second calculator that calculates a first representative brightness value that is a representative brightness value of a plurality of first pixels included in the first region;
a parameter setter that sets, according to the first representative brightness value and the overall representative brightness value, a first parameter of first gamma correction to cause a brightness to increase by a greater degree as the first representative brightness value is smaller and cause the brightness to increase by a greater degree as the overall representative brightness value is greater, the first gamma correction being correction for increasing the brightness as compared with reference gamma correction based on a reference parameter; and
a gamma corrector that performs gamma correction on the input image by performing the first gamma correction based on the first parameter on the first region of the input image, and outputs an output image obtained through the gamma correction.
